# EUROPEAN PATENT SPECIFICATION

(11) **EP 3 989 201 B1**
(45) Date of publication and mention of the grant of the patent: **06.12.2023**
(21) Application number: 22157180.5
(22) Date of filing: 17.02.2022
(51) Int. Cl.: G08G 1/095, G08G 1/07, G08G 1/01, G08G 1/085

(54) **LIGHT STATE DATA PROCESSING METHOD, APPARATUS AND SYSTEM**
VERFAHREN, VORRICHTUNG UND SYSTEM ZUR DATENVERARBEITUNG EINES LICHTZUSTANDES
PROCEDE, APPAREIL ET SYSTEME DE TRAITEMENT DE DONNEES D'ETAT LUMINEUX

(30) Priority: 27.05.2021 CN 202110585150
(43) Date of publication of application: 27.04.2022
(73) Proprietor: Apollo Intelligent Connectivity (Beijing) Technology Co., Ltd., Beijing (CN)
(72) Inventor: YU, Gao, Beijing (CN); WANG, Chuang, Beijing (CN); ZHANG, Chi, Beijing (CN)
(74) Representative: J A Kemp LLP

(56) References cited:
- US-A1- 2014 118 168
- US-A1- 2018 012 486

## Description

### TECHNICAL FIELD

The present disclosure relates to the field of intelligent transportation technologies in the field of artificial intelligence technologies, and, in particular, to a light state data processing method, apparatus and system.

### BACKGROUND

With the progress of urbanization and the development of intelligent traffic technologies, light state data of traffic lights is widely used, such as for traffic information publishing (for example, publishing light state information in a map, etc.). How to improve the reliability of the light state information has become an urgent problem to be solved.

In related arts, a commonly used light state data processing method includes: if light state data of a current frame is not received, determining in a manual manner, a light state countdown time according to light state data of a previous frame, determining, according to the light state countdown time, a current light state and sustaining the current light state to an ending time of a corresponding light state, and generating and publishing light state information according to the light state data of the previous frame from a current time to the ending time.

However, the method mentioned above requires manual intervention, thus resulting in a waste of costs of human resources, moreover, the light state information is undergoing problems of low accuracy and reliability due to human subjective factors, and it is impossible to fulfill a scenario where there is a long-term lack of light state or where a light state control policy changes.

US2014118168A1 discloses a device that may obtain information associated with a traffic light. The traffic light may control a flow of traffic associated with a first location. The device may obtain travel information associated with a mobile device and determine, based on the travel information, that the mobile device is located at a second location, that is different from the first location, and is traveling toward the first location. The device may determine a projected status of the traffic light based on the information associated with the traffic light and the travel information. The projected status of the traffic light indicating a status of the traffic light at a time the mobile device is projected to arrive at the first location. The device may transmit information identifying the projected status to the mobile device.

### SUMMARY

The present disclosure provides a light state data processing method, apparatus and system for improving accuracy of light state information. The present application is set out in the appended set of claims.

According to a first aspect of the present disclosure, provided is a light state data processing method, including:
during monitoring light state data of a traffic light, if a light cap controlling time represented by current actual light state data and a light cap controlling time represented by first estimated light state data corresponding to the current actual light state data are different, adjusting the first estimated light state data according to the current actual light state data to obtain second estimated light state data, where a light cap controlling time represented by the second estimated light state data is the same as the light cap controlling time represented by the current actual light state data; and
in response to determining that the current actual light state data does not satisfy a preset light state data requirement, generating and outputting first light state information based on the second estimated light state data.

According to a second aspect of the present disclosure, provided is a light state data processing apparatus, including:
an adjusting unit, configured to, during monitoring light state data of a traffic light, if a light cap controlling time represented by current actual light state data and a light cap controlling time represented by first estimated light state data corresponding to the current actual light state data are different, adjust the first estimated light state data according to the current actual light state data to obtain second estimated light state data, where a light cap controlling time represented by the second estimated light state data is the same as the light cap controlling time represented by the current actual light state data;
a first generating unit, configured to, in response to determining that the current actual light state data does not satisfy a preset light state data requirement, generate first light state information based on the second estimated light state data; and
a first outputting unit, configured to output the first light state information.

According to a third aspect of the present disclosure, provided is an electronic device, including:
at least one processor; and
a memory in communicative connection with the at least one processor;
where the memory stores thereon instructions that are executable by the at least one processor, the instructions are executed by the at least one processor to enable the at least one processor to implement the method according to the first aspect.

According to a fourth aspect of the present disclosure, provided is a non-transitory computer readable storage medium having stored computer instructions thereon, where the computer instructions are configured to enable a computer to execute the method according to the first aspect.

According to a fifth aspect of the present disclosure, provided is a computer program product including: a computer program, where the computer program is stored in a readable storage medium from which at least one processor of an electronic device may read the computer program, the computer program is executed by the at least one processor so that the electronic device implements the method according to the first aspect.

According to a sixth aspect of the present disclosure, provided is a light state data processing system, including: a traffic light and the apparatus according to the second aspect.

It should be understood that the content described in this section is neither intended to identify key or important features of embodiments of the present disclosure, nor is used to limit the scope of the present disclosure. Other features of the present disclosure will be readily understood through the following description.

### BRIEF DESCRIPTION OF DRAWINGS

The drawings are intended to achieve a better understanding of the present solution and do not constitute a limitation of the present disclosure. Among them:
FIG. 1 is a schematic diagram of a scenario in which an embodiment of the present disclosure can be implemented;
FIG. 2 is a schematic diagram according to a first embodiment of the present disclosure;
FIG. 3 is a schematic diagram according to a second embodiment of the present disclosure;
FIG. 4 is a schematic diagram according to a third embodiment of the present disclosure;
FIG. 5 is a schematic diagram according to a fourth embodiment of the present disclosure;
FIG. 6 is a schematic diagram according to a fifth embodiment of the present disclosure;
FIG. 7 is a schematic diagram according to a sixth embodiment of the present disclosure; and
FIG. 8 is a block diagram of an electronic device for implementing a light state data processing method according to an embodiment of the present disclosure.

### DESCRIPTION OF EMBODIMENTS

Exemplary embodiments of the present disclosure are explained hereunder in conjunction with the accompanying drawings, including various details of embodiments of the present disclosure helpful to understanding, which should be considered as being only exemplary. Therefore, those of ordinary skill in the art should recognize that various changes and modifications can be made to the embodiments described herein without departing from the scope of the present disclosure. Similarly, for clarity and conciseness, the description for well-known functions and structures is omitted from the following description.

A traffic light is provided at an intersection to direct traffic of vehicles and/or pedestrians passing by the intersection. The traffic light includes at least one light cap which can be lit up according to light state data, and a light-up sequence of various light caps, a light-up period and a light-up cycle are determined based on the light state data.

The intersection may be a T-shaped intersection or a cross-shaped intersection, which is not limited in the embodiments. The light state data refers to data for controlling a color and/or a time of the traffic light, such as controlling a light-up time of a light cap of the traffic light, controlling a light-up period of the light cap of the traffic light, controlling a light-up cycle of the light cap of the traffic light, and controlling a light-up sequence of light caps of the traffic light.

With the development of the technologies of the Internet and intelligent traffic, light state data is used for traffic information publishing. For example, light state information may be published in a map (which may be specifically an electronic map) based on the light state data, or published on a traffic control display based on the light state data, or published in a Du mirror based on the light state data, which will not be listed herein.

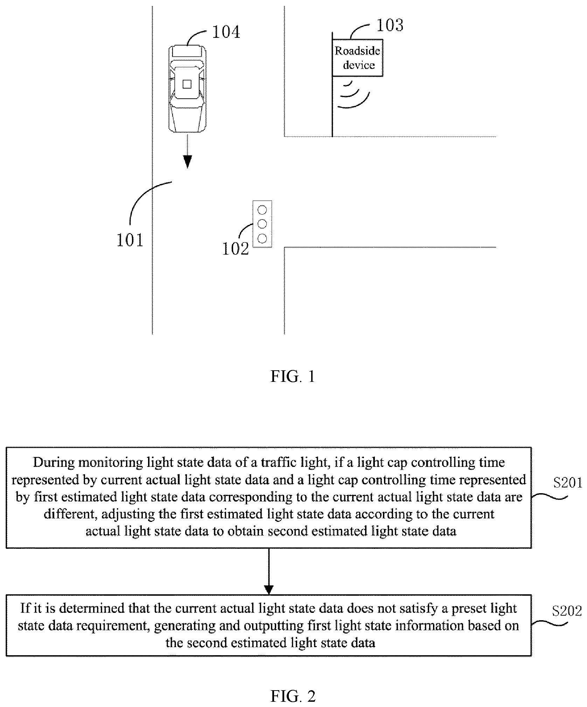

In a case where light state information is published in a map (which may be specifically an electronic map) based on light state data, the light state data processing method according to the present embodiment may be applied to an application scenario as shown in FIG. 1.

As shown in FIG. 1, the scenario includes: an intersection 101, a traffic light 102, a roadside device 103 and a vehicle 104.

The intersection 101 is a T-shaped intersection, and the intersection 101 is provided with the traffic light 102.

The roadside device 103 is in communicative connection with the traffic light 102, and the roadside device 103 is capable of acquiring light state data of the traffic light 102.

The roadside device 103 is capable of generating light state information based on the light state data processing method according to the present embodiment, carrying the light state information in map data, and sending the map data carrying the light state information to the vehicle 104 which is in communicative connection with the roadside device 103.

Accordingly, the vehicle 104 receives the map data carrying the light state information transmitted by the roadside device 103, and displays the map data carrying the light state information, through an electronic device such as an on-board terminal (not shown in the figure).

The light state information refers to information describing a light cap of a traffic light from a time dimension or a color dimension. For example, on a map displayed through a display interface of the on-board terminal, a color of the traffic light 102 (such as a red light and a green light) and a time of a light state (such as a countdown time of the red light) can be displayed at the same time.

It is worth noting that the above example is only used for exemplary explanation of an application scenario to which the light state data processing method according to the present embodiment may be applicable, but should not be construed as a limitation to the application scenario of the light state data processing method according to the present embodiment.

For example, in combination with the above analysis, the light state data processing method according to the present embodiment may also be applied to a scenario where light state information is published on a traffic control display, or a scenario where the light state information is published on a Du mirror; for another example, the light state data processing method according to the present embodiment may also be applied to a cross-shaped intersection scenario; for yet another example, the elements (such as a vehicle, a roadside device, a traffic light, etc.) in FIG. 1 may be increased or decreased accordingly.

It is understood that in the application scenario as shown in FIG. 1, the traffic light and the roadside device are communicatively connected, due to a communication network and other reasons, there may be a situation that the light state data of the traffic light acquired by the roadside device is lost. In related arts, for the continuity and accuracy of the light state information that is published, the following two methods are usually used to process the light state data.

The first method may be referred to as a manual compensation method, in particular: if light state data of a current frame is not received, determining in a manual manner, a countdown time of a light state (i.e., a light state countdown time, for example, a countdown time of a red light etc.) according to light state data of a previous frame, determining, according to the light state countdown time, an ending time corresponding to a light state to which a current light state extends, and generating and publishing light state information according to the light state data of the previous frame from a current time to the ending time.

For example, if it is manually determined that a light state countdown time corresponding to light state data of a previous frame is four seconds, determining that a current light state may sustain for four seconds according to the countdown time of four seconds, so that in light state information to be published, a light state corresponding to the light state data of the previous frame is maintained during the four seconds (for example, a red light is maintained during the four seconds).

However, the use of the manual compensation method requires manual intervention, thus resulting in a waste of costs of human resources, moreover, technical problems of low accuracy and reliability of light state information is rendered due to human subjective factors, and it is impossible to fulfill a scenario where there is a long-term lack of light state or where a light state control policy changes.

The second method may be referred to as a learning compensation method, in particular: if light state data of a current frame is not received, the roadside device performs an estimation according to historical light state data to obtain light state data of the current frame and a subsequent frame, thereby generating and publishing light state information.

However, control policies of a traffic light state corresponding to different time periods may be different, that is, different time periods may correspond to different light state data. If the learning compensation method is adopted, a large difference may be caused between light state data obtained by learning compensation and actual light state data, thus resulting in technical problems of low accuracy and reliability of light state information.

In order to solve at least one of the above technical problems, the inventors of the present disclosure, through creative work, obtained an inventive conception of the present disclosure: when a light cap controlling time represented by actual light state data and a light cap controlling time represented by estimated light state data are different, adjusting the light cap controlling time represented by the estimated light state data based on the light cap controlling time represented by the actual light state data, so as to generate and output light state information based on the estimated light state data when the actual light state data does not meet a light state data requirement.

Based on the above inventive conception, the present disclosure provides a light state data processing method, apparatus and system, which are applied to the field of intelligent transportation technologies in the field of artificial intelligence technologies to improve accuracy and reliability of light state information publishing.

FIG. 2 is a schematic diagram according to a first embodiment of the present disclosure. As shown in FIG. 2, a light state data processing method provided in the present embodiment includes:
S201, during monitoring light state data of a traffic light, if a light cap controlling time represented by current actual light state data and a light cap controlling time represented by first estimated light state data corresponding to the current actual light state data are different, adjusting the first estimated light state data according to the current actual light state data to obtain second estimated light state data.

A light cap controlling time represented by the second estimated light state data is the same as the light cap controlling time represented by the current actual light state data.

For example, the execution subject of the present embodiment may be a light state data processing apparatus (which will be referred to as the processing apparatus hereunder), and the processing apparatus may be a server (including a local server and a cloud server, the server may be a cloud controlling platform, a vehicle-road cooperation management platform, a central subsystem, an edge computing platform, a cloud computing platform, etc.), a roadside device, a terminal device, a processor, or a chip, etc., which is not is not limited in the present embodiment. For example, the roadside device is a roadside sensing device with a computing function or a roadside computing device connected with a roadside sensing device. In a vehicle-road cooperation system architecture of intelligent transportation, the roadside device includes a roadside sensing device and a roadside computing device. The roadside sensing device (such as a roadside camera) is connected to the roadside computing device (such as a roadside computing unit (RSCU)), and the roadside computing device is connected to a server which may communicate with an automatic driving or assisted driving vehicle in various manners; or, the roadside sensing device itself includes a computing function, and the roadside sensing device is directly connected to the server. The above connection may be wired or wireless.

For example, if the light state data processing method in the present embodiment is applied to the application scenario as shown in FIG. 1, the processing apparatus may be the roadside device as shown in FIG. 1.

It should be understood that the "current" in the current actual light state data is used to distinguish it from actual light state data at a subsequent moment in the following description. That is, the light state data processing method is a real-time processing process, with the passage of time, the current actual light state data may become historical actual light state data, and when the subsequent moment comes, the actual light state data at the subsequent moment may become the current actual light state data.

The "first" in the first estimated light state data is used to distinguish it from second estimated light state data and third estimated light state data in the following description.

The estimated light state data and the actual light state data are relative concepts. The actual light state data may be interpreted as real light state data of a traffic light, and the estimated light state data refers to light state data obtained by estimating the actual light state data (i.e. the real light state data) of the traffic light. The specific estimating method is not limited in the present embodiment.

The light cap controlling time may be interpreted as a time used to control light-up, a cycle and a phase of a light state.

Taking an example that the light state data processing method of the present embodiment is applied to the application scenario as shown in FIG. 1, that is, the execution subject of the present embodiment is the processing apparatus, this step may be interpreted as:
the roadside device monitors light state data of a traffic light, in the monitoring process, a light cap controlling time represented by current actual light state data and a light cap controlling time represented by first estimated light state data may be the same, or different. If they two are different, the roadside device may adjust the two to be the same and, specifically, adjust the first estimated light state data based on the current actual light state data, such that the light cap controlling time represented by the adjusted first estimated light state data (i.e. the second estimated light state data) and the light cap controlling time represented by the current actual light state data are the same.

S202, in response to determining that the current actual light state data does not satisfy a preset light state data requirement, generating and outputting first light state information based on the second estimated light state data.

The light state data requirement may be set by the processing apparatus based on a requirement, a historical record, a test, etc., which are not limited in the embodiment.

For example, in the process of monitoring the light state data of the traffic light, the roadside device may monitor that the current actual light state data does not meet the light state data requirement, for example, a situation where a frame is missing from light state data of a traffic light that is monitored by the roadside device, or, a situation where the light state data of the traffic light that is monitored by the roadside device is inconsistent with light state data represented by a control policy, then the roadside device may generate and output first light state information based on the second estimated light state data.

It is worth noting that the light cap controlling time represented by the second estimated light state data and the light cap controlling time represented by the current light state data are the same. Thus, when the first light state information is generated and output based on the second estimated light state data, the first light state information is enabled with relatively high accuracy and reliability.

Based on the above analysis, an embodiment of the present disclosure provides a light state data processing method, including: during monitoring light state data of a traffic light, if a light cap controlling time represented by current actual light state data and a light cap controlling time represented by first estimated light state data corresponding to the current actual light state data are different, adjusting the first estimated light state data according to the current actual light state data to obtain second estimated light state data, where a light cap controlling time represented by the second estimated light state data is the same as the light cap controlling time represented by the current actual light state data; in response to determining that the current actual light state data does not satisfy a preset light state data requirement, generating and outputting first light state information based on the second estimated light state data. The present embodiment introduces features of: adjusting the first estimated light state data to a represented light cap controlling time which is the same as the light cap controlling time represented by the current actual light state data (i.e. the second estimated light state data), such that when the current actual light state data does not satisfy the light state data requirement, generating and outputting first light state information based on the second estimated light state data, thereby avoiding the disadvantage of a waste of human resources caused by the manual compensation method, saving labor costs, and improving flexibility and reliability of light state information publishing, moreover, avoiding the disadvantage of a relatively fixed application scenario caused by the learning compensation method, improving application flexibility and diversity, and achieving a technical effect of improving accuracy and reliability of the light state information published.

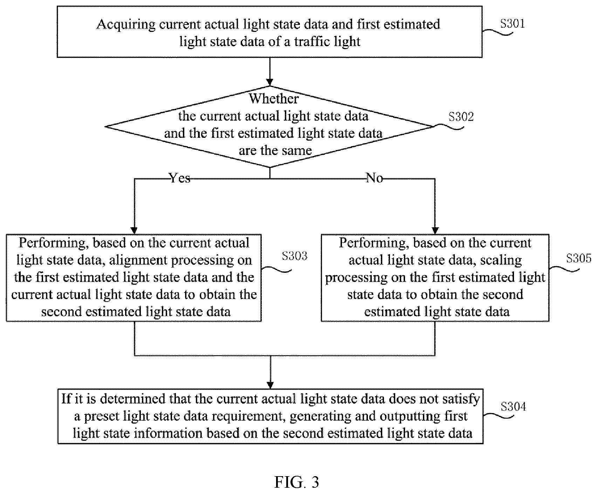

FIG. 3 is a schematic diagram according to a second embodiment of the present disclosure. As shown in FIG. 3, the light state data processing method provided in the present embodiment includes:
S301, acquiring current actual light state data and first estimated light state data of a traffic light.

In an exemplary implementation, determining the first estimated light state data includes the following steps.

Step 1, acquiring a control scheme of the traffic light.

The control scheme represents a controlling rule of the traffic light.

The control scheme may be acquired in various manners. For example, the processing apparatus is in communicative connection with a controlling platform (such as a traffic controlling platform or a manufacture controlling platform) of the traffic light, and the processing apparatus may acquire the control scheme from the controlling platform of the traffic light. For another example, the processing apparatus may predict the control scheme based on historical operation information of the traffic light.

The historical operation information includes a light-up period, a cycle, a phase or the like of a respective light state (such as a red light) of the traffic light.

It is worth noting that in the present embodiment, by predicting the control scheme based on the historical operation information, flexibility and diversity of the obtained control scheme is achieved. Moreover, the control scheme and the historical operation information are in relatively high consistency, which enables the control scheme to have a technical effect of relatively high accuracy and reliability.

Step 2, predicting the current actual light state data of the traffic light according to the control scheme to obtain the first estimated light state data.

It is worth noting that in the present embodiment, the first estimated light state data is obtained by predicting the current actual light state data based on the control scheme. Since the current actual light state data and the control scheme are in highly consistency with each other, the first estimated light state data which is predicted based on the current actual light state data is enabled to have a technical effect of relatively high accuracy and reliability.

S302, determining whether the current actual light state data and the first estimated light state data are the same, if yes, execute S303, if no, execute S305, and subsequently execute S304.

S303, performing, based on the current actual light state data, alignment processing on the first estimated light state data and the actual light state data to obtain the second estimated light state data.

A light cap controlling time represented by the second estimated light state data is the same as the light cap controlling time represented by the current actual light state data.

For example, the current actual light state data is timing data (referred to as first timing data), and the first estimated light state data is also timing data (referred to as second timing data). If the first timing data and the second timing data are the same, it indicates that the first timing data and the second timing data are consistent in data content. If they two are temporally different, that is, one piece of timing data is faster or slower than the other piece of timing data, then adjusting the first timing data and the second timing data in a manner of alignment processing, so that the first timing data and the second timing data are temporally the same.

In the present embodiment, specifically, based on the first timing data, temporally adjusting the second timing data to align the second timing data with the first timing data in terms of time, such that the first timing data and the second timing data are temporally consistent as well.

It is worth noting that in the present embodiment, alignment processing is performed on the first estimated light state data and the actual light state data based on the current actual light state data. Since the current actual light state data is real light state data having relatively high accuracy and reliability, after alignment processing is performed on the first estimated light state data based on the current actual light state data, the alignment-processed first estimated light state data (i.e. the second estimated light state data) also has relatively high accuracy and reliability, such that when first light state information is generated and published based on the second estimated light state data subsequently, the first light state information published is enabled with relatively high accuracy and reliability.

Moreover, when the light state data processing method of the present embodiment is applied to the application scenario as shown in FIG. 1, a vehicle, on acquiring the first light state information, may adjust a driving policy based on the first light state information, such as decelerating, accelerating, lane-changing or the like, so that driving safety of the vehicle may be improved, and a technical effect of improving safety and convenience of travelling may be achieved.

In an exemplary implementation, S303 may include the following steps:
Step 1, determining a light state light-up time represented by the current actual light state data, and determining a light state light-up time represented by the first estimated light state data; and
Step 2, if the light state light-up time represented by the current actual light state data and the light state light-up time represented by the first estimated light state data are different, adjusting the light state light-up time represented by the first estimated light state data to the light state light-up time represented by the current actual light state data.

Based on the above analysis, the traffic light includes a light cap, and the current actual light state data may represent a light-up time of each light state, for example, a light-up time of a yellow light or the like. In the present embodiment, by means of respectively determining the light state light-up time represented by the current actual light state data and the light state light-up time represented by the first estimated light state data, and adjusting the light state light-up time represented by the first estimated light state data to the light state light-up time represented by the current actual light state data, a light state light-up time represented by the second estimated light state data may be the same as the light state light-up time represented by the current actual light state data, i.e., the two are temporally in highly consistency, thus, a technical effect of accuracy and reliability of alignment processing may be achieved.

S304, in response to determining that the current actual light state data does not satisfy a preset light state data requirement, generating and outputting first light state information based on the second estimated light state data.

For example, when monitoring the light state data of the traffic light, the processing apparatus may obtain a result that the current actual light state data does not meet the light state data requirement, or a result that the current actual light state data meets the light state data requirement.

The processing apparatus, when obtaining the result that the current actual light state data does not meet the light state data requirement, generates and outputs the first light state information based on the second estimated light state data; the processing apparatus, when obtaining the result that the current actual light state data meets the light state data requirement, generates and publishes the first light state information based on the current actual light state data.

S305, performing, based on the current actual light state data, scaling processing on the first estimated light state data to obtain the second estimated light state data.

A light state countdown time represented by the second estimated light state data is the same as a light state countdown time represented by the current actual light state data.

In the present embodiment, it may not be possible to achieve alignment if an alignment processing manner is used when the current actual light state data and the first estimated light state data are different. Therefore, in the present embodiment, processing is performed in a scaling processing manner for the case where the current actual light state data and the first estimated light state data are different, so that the light state countdown time represented by the second estimated light state data and the light state countdown time represented by the current actual light state data are the same.

Accordingly, when generating and publishing the first light state information based on the second estimated light state data, since the light state countdown time represented by the second estimated light state data is the same as the light state countdown time represented by the current actual light state data, the first light state information may be kept the same as the current actual light state data within a range of the light state countdown time, thereby achieving a technical effect of improving accuracy and reliability of the first light state information.

In an exemplary implementation, S305 may include the following steps:
Step 1, determining a light state countdown time represented by the current actual light state data, and determining a light state countdown time represented by the first estimated light state data; and
Step 2, performing, based on the light state countdown time represented by the current actual light state data, scaling processing on the light state countdown time represented by the first estimated light state data to obtain the second estimated light state data.

For example, if the light state countdown time represented by the current actual light state data is five seconds, and the light state countdown time represented by the first estimated light state data is nine seconds, then, performing scaling processing on the nine seconds based on the five seconds to adjust the light state countdown time of the nine seconds in such a manner that it is the same as the light state countdown time of the five seconds.

It is worth noting that in the present embodiment, by means of respectively determining the light state countdown time represented by the current actual light state data and the light state countdown time represented by the first estimated light state data, to adjust the light state countdown time represented by the first estimated light state data to a light state countdown time that is the same as the light state countdown time represented by the current actual light state data, the light state countdown time represented by the second estimated light state data can be kept the same as the light state countdown time represented by the current actual light state data, thus, achieving a technical effect of improving accuracy and reliability of the first light state information published in case that the first light state information is generated and published based on the second light state data.

In an exemplary implementation, Step 2 may include: determining, according to the light state countdown time represented by the current actual light state data and the light state countdown time represented by the first estimated light state data, a scale for performing the scaling processing on the first estimated light state data, and performing the scaling processing on the first estimated light state data based on the scale to obtain the second estimated light state data.

This step may be interpreted as: the processing apparatus may determine, according to the light state countdown time represented by the current actual light state data and the light state countdown time represented by the first estimated light state data, a refreshing rate for adjusting the light state countdown time represented by the first estimated light state data, the refreshing rate is the scale.

For example, under normal circumstances, a refreshing rate of the light state countdown time represented by the first estimated light state data is one second. When the light state countdown time represented by the current actual light state data is greater than the light state countdown time represented by the first estimated light state data, the refreshing rate of the light state countdown time represented by the first estimated light state data may be adjusted to a value greater than one second. Otherwise, when the light state countdown time represented by the current actual light state data is less than the light state countdown time represented by the first estimated light state data, the refreshing rate of the light state countdown time represented by the first estimated light state data may be adjusted to a value less than one second.

It is worth noting that in the present embodiment, by determining the scale and performing, based on the scale, the scaling processing on the light state countdown time represented by the first estimated light state data, thus, it is possible to achieve a technical effect of improving efficiency and accuracy of the scaling processing.

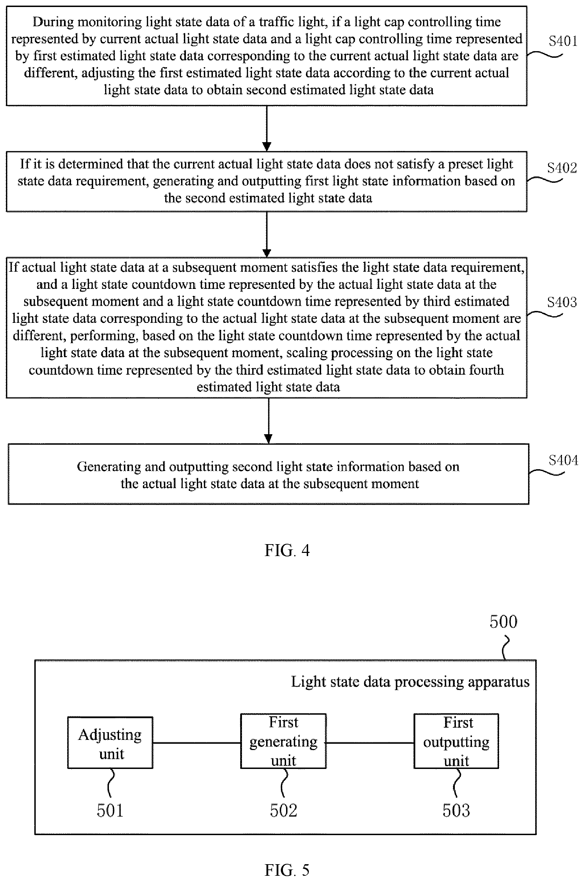

FIG. 4 is a schematic diagram according to a third embodiment of the present disclosure. As shown in FIG. 4, the light state data processing method provided in the present embodiment includes:
S401, during monitoring light state data of a traffic light, if a light cap controlling time represented by current actual light state data and a light cap controlling time represented by first estimated light state data corresponding to the current actual light state data are different, adjusting the first estimated light state data according to the current actual light state data to obtain second estimated light state data.

A light cap controlling time represented by the second estimated light state data is the same as the light cap controlling time represented by the current actual light state data.

S402, in response to determining that the current actual light state data does not satisfy a preset light state data requirement, generating and outputting first light state information based on the second estimated light state data.

For example, for the implementation principles of S401 and S402, reference may be made to the first embodiment or the second embodiment, which will not be repeated here.

S403, if actual light state data at a subsequent moment satisfies the light state data requirement, and a light state countdown time represented by the actual light state data at the subsequent moment and a light state countdown time represented by third estimated light state data corresponding to the actual light state data at the subsequent moment are different, performing, based on the light state countdown time represented by the actual light state data at the subsequent moment, the scaling processing on the light state countdown time represented by the third estimated light state data to obtain fourth estimated light state data.

A light state countdown time represented by the fourth estimated light state data is the same as the light state countdown time represented by the actual light state data at the subsequent moment.

For example, the roadside apparatus monitors the light state data of the traffic light, and it may monitor that the current actual light state data does not meet the light state data requirement. The processing apparatus will still monitor the light state data of the traffic light, and the subsequent actual light state data may meet the light state data requirement or may not meet the light state data requirement. If the subsequent actual light state data meets the light state data requirement, for example, actual light state data at a subsequent moment satisfies the light state data requirement, then scaling processing may be performed on the light state countdown time represented by the third estimated light state data based on the light state countdown time represented by the actual light state data at the subsequent moment (for specific implementation principles, reference may be made to the example described above, which will not be repeated here), so that the light state countdown time represented by the scaling-processed third estimated light state data (the fourth estimated light state data) is the same as the light state countdown time represented by the actual light state data at the subsequent moment.

It is worth noting that by performing scaling processing on the light state countdown time represented by the third estimated light state data so that the light state countdown time represented by the third estimated light state data is the same as the light state countdown time represented by the actual light state data at the subsequent moment, when generating and outputting second light state information based on the actual light state data at the subsequent moment, the second light state information may fully display the light state countdown time represented by the third estimated light state data, thus achieving a technical effect that a seamless transition between the published first light state information and second light state information is improved and integrity of the light state information published is improved.

S404, generating and outputting second light state information based on the actual light state data at the subsequent moment.

FIG. 5 is a schematic diagram according to a fourth embodiment of the present disclosure. As shown in FIG. 5, a light state data processing apparatus 500 provided in the present embodiment includes:
an adjusting unit 501, configured to, during monitoring light state data of a traffic light, if a light cap controlling time represented by current actual light state data and a light cap controlling time represented by first estimated light state data corresponding to the current actual light state data are different, adjust the first estimated light state data according to the current actual light state data to obtain second estimated light state data, where a light cap controlling time represented by the second estimated light state data is the same as the light cap controlling time represented by the current actual light state data;
a first generating unit 502, configured to, in response to determining that the current actual light state data does not satisfy a preset light state data requirement, generate first light state information based on the second estimated light state data; and
a first outputting unit 503, configured to output the first light state information.

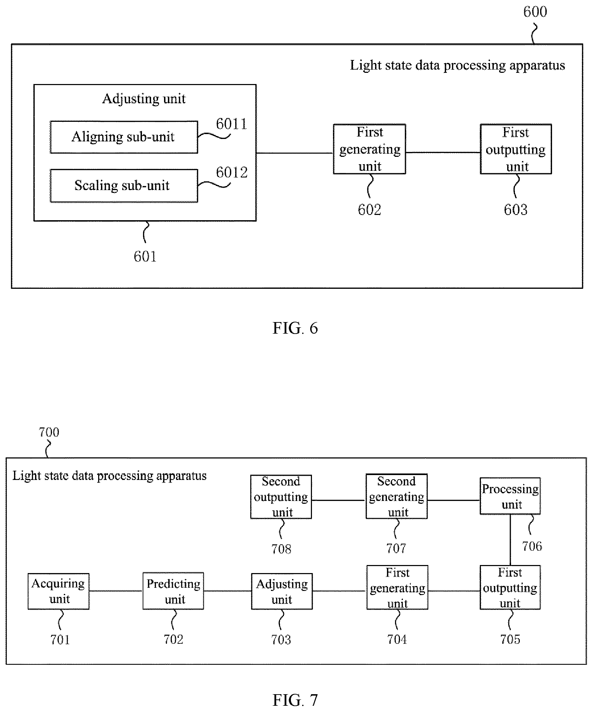

FIG. 6 is a schematic diagram according to a fifth embodiment of the present disclosure. As shown in FIG. 6, a light state data processing apparatus 600 provided in the present embodiment includes:
an adjusting unit 601, configured to, during monitoring light state data of a traffic light, if a light cap controlling time represented by current actual light state data and a light cap controlling time represented by first estimated light state data corresponding to the current actual light state data are different, adjust the first estimated light state data according to the current actual light state data to obtain second estimated light state data, where a light cap controlling time represented by the second estimated light state data is the same as the light cap controlling time represented by the current actual light state data.

A first generating unit 602, configured to, in response to determining that the current actual light state data does not satisfy a preset light state data requirement, generate first light state information based on the second estimated light state data.

A first outputting unit 603, configured to output the first light state information.

It is known from FIG. 6 that in an exemplary implementation, the adjusting unit 601 includes:
an aligning sub-unit 6011, configured to, if the current actual light state data and the first estimated light state data are the same light state data, perform, based on the current actual light state data, alignment processing on the first estimated light state data and the current actual light state data to obtain the second estimated light state data.

In an exemplary implementation, the aligning sub-unit 6011 includes:
a first determining module, configured to determine a light state light-up time represented by the current actual light state data, and determine a light state light-up time represented by the first estimated light state data; and
an adjusting module, configured to, if the light state light-up time represented by the current actual light state data and the light state light-up time represented by the first estimated light state data are different, adjust the light state light-up time represented by the first estimated light state data to the light state light-up time represented by the current actual light state data.

It is known from FIG. 6 that in an exemplary implementation, the adjusting unit 601 includes:
a scaling sub-unit 6012, configured to, if the current actual light state data and the first estimated light state data are different light state data, perform, based on the current actual light state data, scaling processing on the first estimated light state data to obtain the second estimated light state data, where a light state countdown time represented by the second estimated light state data is the same as a light state countdown time represented by the current actual light state data.

In an exemplary implementation, the scaling sub-unit 6012 includes:
a second determining module, configured to determine a light state countdown time represented by the current actual light state data, and determine a light state countdown time represented by the first estimated light state data; and
a scaling module, configured to perform, based on the light state countdown time represented by the current actual light state data, scaling processing on the light state countdown time represented by the first estimated light state data to obtain the second estimated light state data.

In an exemplary implementation, the scaling module is configured to determine, according to the light state countdown time represented by the current actual light state data and the light state countdown time represented by the first estimated light state data, a scale for performing the scaling processing on the first estimated light state data, and perform the scaling processing on the first estimated light state data based on the scale to obtain the second estimated light state data.

FIG. 7 is a schematic diagram according to a sixth embodiment of the present disclosure. As shown in FIG. 7, a light state data processing apparatus 700 provided in the present embodiment includes:
an acquiring unit 701, configured to acquire a control scheme of the traffic light, where the control scheme represents a controlling rule of the traffic light; in an exemplary implementation, the control scheme is generated based on historical operation information of the traffic light;
a predicting unit 702, configured to predict the current actual light state data of the traffic light according to the control scheme to obtain the first estimated light state data;
an adjusting unit 703, configured to, during monitoring light state data of a traffic light, if a light cap controlling time represented by current actual light state data and a light cap controlling time represented by first estimated light state data corresponding to the current actual light state data are different, adjust the first estimated light state data according to the current actual light state data to obtain second estimated light state data, where a light cap controlling time represented by the second estimated light state data is the same as the light cap controlling time represented by the current actual light state data;
a first generating unit 704, configured to, in response to determining that the current actual light state data does not satisfy a preset light state data requirement, generate first light state information based on the second estimated light state data;
a first outputting unit 705, configured to output the first light state information;
a processing unit 706, configured to, if actual light state data at a subsequent moment satisfies the preset light state data requirement, and a light state countdown time represented by the actual light state data at the subsequent moment and a light state countdown time represented by third estimated light state data corresponding to the actual light state data at the subsequent moment are different, perform, based on the light state countdown time represented by the actual light state data at the subsequent moment, scaling processing on the light state countdown time represented by the third estimated light state data to obtain fourth estimated light state data; where a light state countdown time represented by the fourth estimated light state data is the same as the light state countdown time represented by the actual light state data at the subsequent moment;
a second generating unit 707, configured to generate second light state information based on the actual light state data at the subsequent moment; and
a second outputting unit 708, configured to output the second light state information.

According to embodiments of the present disclosure, the present disclosure further provides an electronic device and a readable storage medium.

According to an embodiment of the present disclosure, the present disclosure further provides a computer program product. The computer program product includes: a computer program. The computer program is stored in a readable storage medium. At least one processor of an electronic device is capable of reading the computer program from the readable storage medium, and when the computer program is executed by the at least one processor, the solution provided in any of the embodiments described above is implemented by the electronic device.

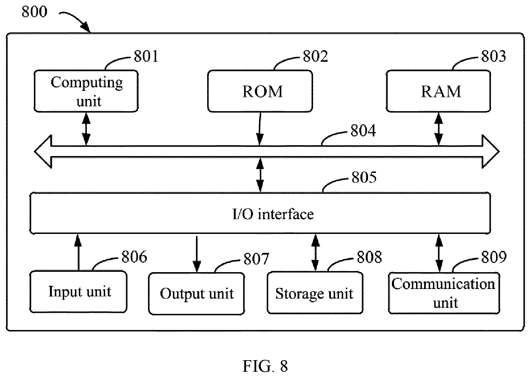

FIG. 8 shows a schematic block diagram of an exemplary electronic device 800 that may be used to implement the embodiments of the present disclosure. The electronic device is intended to represent various forms of digital computers, such as a laptop, a desktop, a workstation, a personal digital assistant, a server, a blade server, a mainframe computer, or other suitable computers. The electronic device may also represent various forms of mobile devices, such as a personal digital assistant, a cellular phone, a smart phone, a wearable device, and other similar computing devices. The components, and the connections, relationships and functions thereof are merely exemplary and are not intended to limit the implementations of the present disclosure described and/or claimed herein.

As shown in FIG. 8, the electronic device 800 includes a computing unit 801 that is capable of performing various appropriate actions or processes according to a computer program stored in a read only memory (ROM) 802 or a computer program loaded from a storage unit 808 into a random access memory (RAM) 803. In the RAM 803, various programs and data required for operations of the device 800 may also be stored. The computing unit 801, the ROM 802 and the RAM 803 are connected to each other via a bus 804. An input/output (I/O) interface 805 is also connected to the bus 804.

A plurality of components in the device 800 are connected to the I/O interface 805, including: an input unit 806, such as a keyboard, a mouse, etc.; an output unit 807, such as various types of displays, speakers, etc.; a storage unit 808, such as a magnetic disk, an optical disc, etc.; and a communication unit 809, such as a network card, a modem, a wireless communication transceiver, etc. The communication unit 809 allows the device 800 to exchange information/data with other devices through a computer network such as the Internet and/or various telecommunication networks.

The computing unit 801 may be various general-purpose and/or special-purpose processing components with processing and computing capabilities. Some examples of the computing unit 801 include but not limited to, a central processing unit (CPU), a graphics processing unit (GPU), various dedicated artificial intelligence (AI) computing chips, various computing units for running machine learning model algorithms, a digital signal processor (DSP), and any appropriate processor, controller, microcontroller, etc. The computing unit 801 executes various methods and processes described above, such as the light state data processing method. For example, in an exemplary implementation, the light state data processing method may be implemented as a computer software program, which is tangibly contained in a machine-readable medium, such as the storage unit 808. In an exemplary implementation, a portion or ann entirety of the computer program may be loaded and/or installed on the device 800 via the ROM 802 and/or the communication unit 809. When the computer program is loaded into the RAM 803 and executed by the computing unit 801, one or more steps of the light state data processing method described above may be implemented. Alternatively, in other embodiments, the computing unit 801 may be configured to perform the light state data processing method by any other appropriate means (for example, by means of firmware).

Various implementations of the systems and technologies described above may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software and/or a combination thereof. These various implementations may include: being implemented in one or more computer programs, the one or more computer programs may be executed and/or interpreted on a programmable system including at least one programmable processor, the programmable processor may be a special-purpose or general-purpose programmable processor, which may receive data or instructions from a storage system, at least one input device and at least one output device and transmit the data and instructions to the storage system, the at least one input device, and the at least one output device.

Program codes for implementing the method of the present disclosure may be written in one or any combination of multiple programming languages. These program codes may be provided to a processor or a controller of a general-purpose computer, a special-purpose computer or other programmable data processing apparatus, such that when the program codes are executed by the processor or the controller, the functions/operations specified in the flowcharts and/or block diagrams are implemented. The program codes may be executed completely on a machine, partially on the machine, partially on the machine and partially on a remote machine as a separate software package, or completely on the remote machine or a server.

In the context of the present disclosure, the machine-readable medium may be a tangible medium that may contain or store programs to be used by an instruction executing system, apparatus or device, or used in combination with the instruction executing system, apparatus or device. The machine-readable medium may be a machine-readable signal medium or a machine-readable storage medium. The machine-readable medium may include but not limited to an electronic, magnetic, optical, electromagnetic, infrared, or semiconductor system, apparatus or device, or any suitable combination of the above. More specific examples of the machine-readable storage medium may include an electrical connection based on one or more lines, a portable computer disk, a hard disk, a random access memory (RAM), a read only memory (ROM), a erasable programmable read only memory (EPROM or flash memory), an optical fiber, a portable compact disk read only memory (CD-ROM), an optical storage device, a magnetic storage device or any suitable combination of the above.

In order to provide an interaction with a user, the system and technologies described herein may be implemented on a computer having: a display device for displaying information to the user (for example, a CRT (cathode ray tube) or LCD (liquid crystal display) monitor); and a keyboard and pointing device (for example, a mouse or a trackball) through which the user may provide input to the computer. Other kinds of devices may also be used to provide an interaction with the user, for example, feedback provided to the user may be any form of sensory feedback (for example, visual feedback, auditory feedback, or tactile feedback); and the input from the user may be received in any form (including an acoustic input, a voice input or a tactile input).

The system and technologies described herein may be implemented in a computing system that includes a background component, for example, as a data server, or a computing system that includes a middleware component, for example, an application server, or a computing system that includes a front-end component, for example, a user computer having a graphical user interface or a web browser through which a user may interact with the implementations of the system and technologies described herein), or a computing system that includes any combination of such background component, middleware component, or front-end component. The components of the system may be connected to each other by digital data communication (for example, a communication network) in any form or medium. An example of the communication network includes a local area network (LAN), a wide area network (WAN), or the Internet.

A computer system may include a client and a server. The client and the server are generally far away from each other and typically interact through a communication network. The relationship between the client and the server is generated by running computer programs having a client-server relationship on corresponding computers. The server, which may be a cloud server, also known as a cloud computing server or a cloud host, is a host product in a cloud computing service system to solve the defects of management difficulties and weak business scalability that exist in a conventional physical host and a VPS ("virtual private server", or "VPS") service. The server may also be a server of a distributed system, or a server combined with blockchain.

According to another aspect of the embodiments of the present disclosure, an embodiment of the present disclosure also provides a light state data processing system, including: a traffic light and the light state data processing apparatus as described in any of the foregoing embodiments.

In an exemplary implementation, the light state data processing apparatus may be a roadside device.

In an exemplary implementation, the light state data processing system further includes: a vehicle which is configured to adjust a driving policy (for example, adjusting a driving speed or direction, etc.) based on light state information (for example, the first light state information, or the second light state information) transmitted by the roadside device.

## Claims

1. Alight state data processing method, **characterized by** comprising:
during monitoring light state data of a traffic light, if a light cap controlling time represented by current actual light state data and a light cap controlling time represented by first estimated light state data corresponding to the current actual light state data are different, adjusting (S201, S401) the first estimated light state data according to the current actual light state data to obtain second estimated light state data, wherein a light cap controlling time represented by the second estimated light state data is the same as the light cap controlling time represented by the current actual light state data, wherein the light cap controlling time refers to a time used to control light-up, a cycle and a phase of a light state; and
in response to determining that the current actual light state data does not satisfy a preset light state data requirement, generating and outputting (S202, S304, S402) first light state information based on the second estimated light state data.

2. The method according to claim 1, wherein adjusting (S201, S401) the first estimated light state data according to the current actual light state data to obtain the second estimated light state data, comprises:
if the current actual light state data and the first estimated light state data are the same light state data, performing (S303), based on the current actual light state data, alignment processing on the first estimated light state data and the current actual light state data to obtain the second estimated light state data.

3. The method according to claim 2, wherein performing (S303), based on the current actual light state data, the alignment processing on the first estimated light state data and the current actual light state data to obtain the second estimated light state data, comprises:
determining a light state light-up time represented by the current actual light state data, and determining a light state light-up time represented by the first estimated light state data; and
if the light state light-up time represented by the current actual light state data and the light state light-up time represented by the first estimated light state data are different, adjusting the light state light-up time represented by the first estimated light state data to the light state light-up time represented by the current actual light state data.

4. The method according to claim 1, wherein adjusting (S201, S401) the first estimated light state data according to the current actual light state data to obtain the second estimated light state data, comprises:
if the current actual light state data and the first estimated light state data are different light state data, performing (S305), based on the current actual light state data, scaling processing on the first estimated light state data to obtain the second estimated light state data, wherein a light state countdown time represented by the second estimated light state data is the same as a light state countdown time represented by the current actual light state data.

5. The method according to claim 4, wherein performing (S305), based on the current actual light state data, the scaling processing on the first estimated light state data to obtain the second estimated light state data, comprises:
determining a light state countdown time represented by the current actual light state data, and determining a light state countdown time represented by the first estimated light state data; and
performing, based on the light state countdown time represented by the current actual light state data, the scaling processing on the light state countdown time represented by the first estimated light state data to obtain the second estimated light state data.

6. The method according to claim 5, wherein performing, based on the light state countdown time represented by the current actual light state data, the scaling processing on the light state countdown time represented by the first estimated light state data to obtain the second estimated light state data, comprises:
determining, according to the light state countdown time represented by the current actual light state data and the light state countdown time represented by the first estimated light state data, a scale for performing the scaling processing on the first estimated light state data, and performing the scaling processing on the first estimated light state data based on the scale to obtain the second estimated light state data.

7. The method according to any one of claims 1 to 6, after generating and outputting (S202, S304, S402) the first light state information based on the second estimated light state data, further comprising:
if actual light state data at a subsequent moment satisfies the light state data requirement, and a light state countdown time represented by the actual light state data at the subsequent moment and a light state countdown time represented by third estimated light state data corresponding to the actual light state data at the subsequent moment are different, performing (S403), based on the light state countdown time represented by the actual light state data at the subsequent moment, scaling processing on the light state countdown time represented by the third estimated light state data to obtain fourth estimated light state data; wherein a light state countdown time represented by the fourth estimated light state data is the same as the light state countdown time represented by the actual light state data at the subsequent moment; and
generating and outputting (S404) second light state information based on the actual light state data at the subsequent moment.

8. The method according to any one of claims 1 to 7, further comprising:
acquiring a control scheme of the traffic light, wherein the control scheme represents a controlling rule of the traffic light; and
predicting the current actual light state data of the traffic light according to the control scheme to obtain the first estimated light state data.

9. The method according to claim 8, wherein the control scheme is generated based on historical operation information of the traffic light.

10. A light state data processing apparatus (500, 600, 700), **characterized by** comprising:
an adjusting unit (501, 601, 703), configured to, during monitoring light state data of a traffic light, if a light cap controlling time represented by current actual light state data and a light cap controlling time represented by first estimated light state data corresponding to the current actual light state data are different, adjust the first estimated light state data according to the current actual light state data to obtain second estimated light state data, wherein a light cap controlling time represented by the second estimated light state data is the same as the light cap controlling time represented by the current actual light state data, wherein the light cap controlling time refers to a time used to control light-up, a cycle and a phase of a light state;
a first generating unit (502, 602, 704), configured to, in response to determining that the current actual light state data does not satisfy a preset light state data requirement, generate first light state information based on the second estimated light state data; and
a first outputting unit (503, 603, 705), configured to output the first light state information.

11. The apparatus (500, 600, 700) according to claim 10, wherein the adjusting unit (501, 601, 703) comprises:
an aligning sub-unit (6011), configured to, if the current actual light state data and the first estimated light state data are the same light state data, perform, based on the current actual light state data, alignment processing on the first estimated light state data and the current actual light state data to obtain the second estimated light state data.

12. The apparatus (500, 600, 700) according to claim 11, wherein the aligning sub-unit (6011) comprises:
a first determining module, configured to determine a light state light-up time represented by the current actual light state data, and determine a light state light-up time represented by the first estimated light state data; and
an adjusting module, configured to, if the light state light-up time represented by the current actual light state data and the light state light-up time represented by the first estimated light state data are different, adjust the light state light-up time represented by the first estimated light state data to the light state light-up time represented by the current actual light state data.

13. A non-transitory computer readable storage medium, **characterized by** storing thereon computer instructions, wherein the computer instructions are configured to enable a computer to implement the method according to any one of claims 1 to 9.

14. A computer program product, **characterized by** comprising a computer program, when the computer program is executed by a processer, the method according to any one of claims 1 to 9 is implemented.

15. A light state data processing system, **characterized by** comprising: a traffic light and an apparatus which is configured to implement the method according to any one of claims 1 to 9.

## Patentansprüche

1. Verfahren zur Verarbeitung von Lichtzustandsdaten, **dadurch gekennzeichnet, dass** es umfasst:
während der Überwachung von Lichtzustandsdaten einer Verkehrsampel, wenn eine Lichtkappensteuerungszeit, die durch aktuelle tatsächliche Lichtzustandsdaten dargestellt wird, und eine Lichtkappensteuerungszeit, die durch erste geschätzte Lichtzustandsdaten dargestellt wird, die den aktuellen tatsächlichen Lichtzustandsdaten entsprechen, unterschiedlich sind, Anpassen (S201, S401) der ersten geschätzten Lichtzustandsdaten gemäß den aktuellen tatsächlichen Lichtzustandsdaten, um zweite geschätzte Lichtzustandsdaten zu erhalten, wobei eine durch die zweiten geschätzten Lichtzustandsdaten dargestellte Lichtkappensteuerungszeit dieselbe ist wie die durch die aktuellen tatsächlichen Lichtzustandsdaten dargestellte Lichtkappensteuerungszeit, wobei sich die Lichtkappensteuerungszeit auf eine Zeit bezieht, die verwendet wird, um das Aufleuchten, einen Zyklus und eine Phase eines Lichtzustandes zu steuern; und
als Reaktion auf die Feststellung, dass die aktuellen tatsächlichen Lichtzustandsdaten eine voreingestellte Lichtzustandsdatenanforderung nicht erfüllen, Erzeugen und Ausgeben (S202, S304, S402) von ersten Lichtzustandsinformationen basierend auf den zweiten geschätzten Lichtzustandsdaten.

2. Verfahren nach Anspruch 1, wobei das Anpassen (S201, S401) der ersten geschätzten Lichtzustandsdaten gemäß den aktuellen tatsächlichen Lichtzustandsdaten, um die zweiten geschätzten Lichtzustandsdaten zu erhalten, umfasst:
wenn die aktuellen tatsächlichen Lichtzustandsdaten und die ersten geschätzten Lichtzustandsdaten die gleichen Lichtzustandsdaten sind, Durchführen (S303), basierend auf den aktuellen tatsächlichen Lichtzustandsdaten, einer Abgleichverarbeitung an den ersten geschätzten Lichtzustandsdaten und den aktuellen tatsächlichen Lichtzustandsdaten, um die zweiten geschätzten Lichtzustandsdaten zu erhalten.

3. Verfahren nach Anspruch 2, wobei das Durchführen (S303) der Ausrichtungsverarbeitung an den ersten geschätzten Lichtzustandsdaten und den aktuellen tatsächlichen Lichtzustandsdaten, basierend auf den aktuellen tatsächlichen Lichtzustandsdaten, um die zweiten geschätzten Lichtzustandsdaten zu erhalten, umfasst:
Bestimmen einer Lichtzustandsaufhellungszeit, die durch die aktuellen tatsächlichen Lichtzustandsdaten dargestellt wird, und Bestimmen einer Lichtzustandsaufhellungszeit, die durch die ersten geschätzten Lichtzustandsdaten dargestellt wird; und
wenn die durch die aktuellen tatsächlichen Lichtzustandsdaten dargestellte Lichtzustandsaufhellungszeit und die durch die ersten geschätzten Lichtzustandsdaten dargestellte Lichtzustandsaufhellungszeit unterschiedlich sind, Anpassen der durch die ersten geschätzten Lichtzustandsdaten dargestellten Lichtzustandsbeleuchtungszeit an die durch die aktuellen tatsächlichen Lichtzustandsdaten dargestellte Lichtzustandsbeleuchtungszeit.

4. Verfahren nach Anspruch 1, wobei das Anpassen (S201, S401) der ersten geschätzten Lichtzustandsdaten gemäß den aktuellen tatsächlichen Lichtzustandsdaten, um die zweiten geschätzten Lichtzustandsdaten zu erhalten, umfasst:
wenn die aktuellen tatsächlichen Lichtzustandsdaten und die ersten geschätzten Lichtzustandsdaten unterschiedliche Lichtzustandsdaten sind, Durchführen (S305), basierend auf den aktuellen tatsächlichen Lichtzustandsdaten, einer Skalierungsverarbeitung an den ersten geschätzten Lichtzustandsdaten, um die zweiten geschätzten Lichtzustandsdaten zu erhalten, wobei eine Lichtzustands-Countdown-Zeit, die durch die zweiten geschätzten Lichtzustandsdaten dargestellt wird, dieselbe ist wie eine Lichtzustands-Countdown-Zeit, die durch die aktuellen tatsächlichen Lichtzustandsdaten dargestellt wird.

5. Verfahren nach Anspruch 4, wobei das Durchführen (S305) der Skalierungsverarbeitung an den ersten geschätzten Lichtzustandsdaten, basierend auf den aktuellen tatsächlichen Lichtzustandsdaten, um die zweiten geschätzten Lichtzustandsdaten zu erhalten, umfasst:
Bestimmen einer Lichtzustands-Countdown-Zeit, die durch die aktuellen tatsächlichen Lichtzustandsdaten dargestellt wird, und Bestimmen einer Lichtzustands-Countdown-Zeit, die durch die ersten geschätzten Lichtzustandsdaten dargestellt wird; und
Durchführen der Skalierungsverarbeitung an der Lichtzustands-Countdown-Zeit, die durch die ersten geschätzten Lichtzustandsdaten dargestellt wird, basierend auf der Lichtzustands-Countdown-Zeit, die durch die aktuellen tatsächlichen Lichtzustandsdaten dargestellt wird, um die zweiten geschätzten Lichtzustandsdaten zu erhalten.

6. Verfahren nach Anspruch 5, wobei das Durchführen der Skalierungsverarbeitung an der Lichtzustands-Countdown-Zeit, die durch die ersten geschätzten Lichtzustandsdaten dargestellt wird, basierend auf der Lichtzustands-Countdown-Zeit, die durch die aktuellen tatsächlichen Lichtzustandsdaten dargestellt wird, um die zweiten geschätzten Lichtzustandsdaten zu erhalten, umfasst:
Bestimmen, gemäß der Lichtzustands-Countdown-Zeit, die durch die aktuellen tatsächlichen Lichtzustandsdaten dargestellt wird, und der Lichtzustands-Countdown-Zeit, die durch die ersten geschätzten Lichtzustandsdaten dargestellt wird, einer Skala zur Durchführung der Skalierungsverarbeitung an den ersten geschätzten Lichtzustandsdaten, und Durchführen der Skalierungsverarbeitung an den ersten geschätzten Lichtzustandsdaten basierend auf der Skala, um die zweiten geschätzten Lichtzustandsdaten zu erhalten.

7. Verfahren nach einem der Ansprüche 1 bis 6, das nach dem Erzeugen und Ausgeben (S202, S304, S402) der ersten Lichtzustandsinformationen basierend auf den zweiten geschätzten Lichtzustandsdaten, ferner umfasst:
wenn die tatsächlichen Lichtzustandsdaten zu einem späteren Zeitpunkt die Lichtzustandsdatenanforderung erfüllen, und eine Lichtzustands-Countdown-Zeit, die durch die tatsächlichen Lichtzustandsdaten zu dem nachfolgenden Zeitpunkt dargestellt wird, und eine Lichtzustands-Countdown-Zeit, die durch dritte geschätzte Lichtzustandsdaten dargestellt wird, die den tatsächlichen Lichtzustandsdaten zu dem nachfolgenden Zeitpunkt entsprechen, unterschiedlich sind, Durchführen (S403), basierend auf der Lichtzustands-Countdown-Zeit, die durch die tatsächlichen Lichtzustandsdaten zu dem nachfolgenden Zeitpunkt dargestellt wird, einer Skalierungsverarbeitung an der Lichtzustands-Countdown-Zeit, die durch die dritten geschätzten Lichtzustandsdaten dargestellt wird, um vierte geschätzte Lichtzustandsdaten zu erhalten; wobei eine Lichtzustands-Countdown-Zeit, die durch die vierten geschätzten Lichtzustandsdaten dargestellt wird, dieselbe ist wie die Lichtzustands-Countdown-Zeit, die durch die tatsächlichen Lichtzustandsdaten zu dem nachfolgenden Zeitpunkt dargestellt wird; und
Erzeugen und Ausgeben (S404) von zweiten Lichtzustandsinformationen basierend auf den tatsächlichen Lichtzustandsdaten zu dem nachfolgenden Zeitpunkt.

8. Verfahren nach einem der Ansprüche 1 bis 7, ferner umfassend:
Erfassen eines Steuerungsschemas der Verkehrsampel, wobei das Steuerungsschema eine Steuerungsregel der Verkehrsampel darstellt; und
Vorhersage der aktuellen tatsächlichen Lichtzustandsdaten der Ampel gemäß dem Steuerschema, um die ersten geschätzten Lichtzustandsdaten zu erhalten.

9. Verfahren nach Anspruch 8, wobei das Steuerschema basierend auf historischen Betriebsinformationen der Ampel erzeugt wird.

10. Lichtzustandsdatenverarbeitungsvorrichtung (500, 600, 700), **dadurch gekennzeichnet, dass** sie umfasst:
eine Einstelleinheit (501, 601, 703), die für Folgendes konfiguriert ist: während der Überwachung von Lichtzustandsdaten einer Verkehrsampel, wenn eine Lichtkappensteuerungszeit, die durch aktuelle tatsächliche Lichtzustandsdaten dargestellt wird, und eine Lichtkappensteuerungszeit, die durch erste geschätzte Lichtzustandsdaten dargestellt wird, die den aktuellen tatsächlichen Lichtzustandsdaten entsprechen, unterschiedlich sind, Anpassen der ersten geschätzten Lichtzustandsdaten gemäß den aktuellen tatsächlichen Lichtzustandsdaten, um zweite geschätzte Lichtzustandsdaten zu erhalten, wobei eine durch die zweiten geschätzten Lichtzustandsdaten dargestellte Lichtkappensteuerungszeit dieselbe ist wie die durch die aktuellen tatsächlichen Lichtzustandsdaten dargestellte Lichtkappensteuerungszeit, wobei sich die Lichtkappensteuerungszeit auf eine Zeit bezieht, die verwendet wird, um das Aufleuchten, einen Zyklus und eine Phase eines Lichtzustandes zu steuern;
eine erste Erzeugungseinheit (502, 602, 704), die für Folgendes konfiguriert ist: als Reaktion auf die Feststellung, dass die aktuellen tatsächlichen Lichtzustandsdaten eine voreingestellte Lichtzustandsdatenanforderung nicht erfüllen, Erzeugen von ersten Lichtzustandsinformationen basierend auf den zweiten geschätzten Lichtzustandsdaten; und
eine erste Ausgabeeinheit (503, 603, 705), die dafür konfiguriert ist, die ersten Lichtzustandsinformationen auszugeben.

11. Vorrichtung (500, 600, 700) nach Anspruch 10, wobei die Einstelleinheit (501, 601, 703) umfasst:
eine Abgleichuntereinheit (6011), die für Folgendes konfiguriert ist: wenn die aktuellen tatsächlichen Lichtzustandsdaten und die ersten geschätzten Lichtzustandsdaten die gleichen Lichtzustandsdaten sind, Durchführen, basierend auf den aktuellen tatsächlichen Lichtzustandsdaten, einer Abgleichverarbeitung an den ersten geschätzten Lichtzustandsdaten und den aktuellen tatsächlichen Lichtzustandsdaten, um die zweiten geschätzten Lichtzustandsdaten zu erhalten.

12. Vorrichtung (500, 600, 700) nach Anspruch 11, wobei die Ausrichtungsuntereinheit (6011) umfasst:
ein erstes Bestimmungsmodul, das für Folgendes konfiguriert ist: Bestimmen einer Lichtzustandsaufhellungszeit, die durch die aktuellen tatsächlichen Lichtzustandsdaten dargestellt wird, und Bestimmen einer Lichtzustandsaufhellungszeit, die durch die ersten geschätzten Lichtzustandsdaten dargestellt wird; und
ein Anpassungsmodul, das für Folgendes konfiguriert ist: wenn die durch die aktuellen tatsächlichen Lichtzustandsdaten dargestellte Lichtzustandsbeleuchtungszeit und die durch die ersten geschätzten Lichtzustandsdaten dargestellte Lichtzustandsbeleuchtungszeit unterschiedlich sind, Anpassen der durch die ersten geschätzten Lichtzustandsdaten dargestellten Lichtzustandsbeleuchtungszeit an die durch die aktuellen tatsächlichen Lichtzustandsdaten dargestellte Lichtzustandsbeleuchtungszeit.

13. Nicht-flüchtiges, computerlesbares Speichermedium, **dadurch gekennzeichnet, dass** darauf Computerbefehle gespeichert sind, wobei die Computerbefehle so konfiguriert sind, dass sie einen Computer in die Lage versetzen, das Verfahren nach einem der Ansprüche 1 bis 9 zu implementieren.

14. Computerprogrammprodukt, **dadurch gekennzeichnet, dass** es ein Computerprogramm umfasst, wobei das Verfahren nach einem der Ansprüche 1 bis 9 implementiert wird, wenn das Computerprogramm von einer Verarbeitungseinrichtung ausgeführt wird.

15. Lichtzustandsdatenverarbeitungssystem, **dadurch gekennzeichnet, dass** es umfasst:
eine Ampel und eine Vorrichtung, die dafür konfiguriert ist, das Verfahren nach einem der Ansprüche 1 bis 9 auszuführen.

## Revendications

1. Procédé de traitement des données d'état de lumière, **caractérisé en ce qu'**il comprend :
pendant la surveillance de données d'état de lumière d'un feu de circulation, si un temps de commande voyant lumineux représenté par des données d'état de lumière réelles actuelles et un temps de commande de voyant lumineux représenté par des premières données d'état de lumière estimées correspondant aux données d'état de lumière réelles actuelles sont différents, l'ajustement (S201, S401) des premières données d'état de lumière estimées selon des données d'état de lumière réelles actuelles afin obtenir des deuxièmes données d'état de lumière estimées, dans lequel un temps de commande de voyant lumineux représenté par les deuxièmes données d'état de lumière estimées est le même que le temps de commande de voyant lumineux représenté par les données d'état de lumière réelles actuelles, dans lequel le temps de commande de voyant lumineux fait référence à un temps utilisé pour commander l'allumage, un cycle et une phase d'un état de lumière ; et
en réponse à la détermination du fait que les données d'état de lumière réelles actuelles ne satisfont pas une exigence prédéfinie de données d'état de lumière, la génération et la fourniture en sortie (S202, S304, S402) de premières informations d'état de lumière sur la base des deuxièmes données d'état de lumière estimées.

2. Procédé selon la revendication 1, dans lequel l'ajustement (S201, S401) des premières données d'état de lumière estimées selon les données d'état de lumière réelles actuelles pour obtenir les deuxièmes données d'état de lumière estimées, comprend :
si les données d'état de lumière réelles actuelles et les premières données d'état de lumière estimées sont les mêmes données d'état de lumière, la réalisation (S303), sur la base des données d'état de lumière réelles actuelles, d'un traitement d'alignement sur les premières données d'état de lumière estimées et les données d'état de lumière réelles actuelles pour obtenir les deuxièmes données d'état de lumière estimées.

3. Procédé selon la revendication 2, dans lequel la réalisation (S303), sur la base des données d'état de lumière réelles actuelles, du traitement d'alignement sur les premières données d'état de lumière estimées et les données d'état de lumière réelles actuelles pour obtenir les deuxièmes données d'état de lumière estimées, comprend :
la détermination d'un temps d'allumage d'état de lumière représenté par les données d'état de lumière réelles actuelles, et la détermination d'un temps d'allumage d'état de lumière représenté par les premières données d'état de lumière estimées ; et
si le temps d'allumage d'état de lumière représenté par les données d'état de lumière réelles actuelles et le temps d'allumage d'état de lumière représenté par les premières données d'état de lumière estimées sont différents, l'ajustement du temps d'allumage d'état de lumière représenté par les premières données d'état de lumière estimées au temps d'allumage d'état de lumière représenté par les données d'état de lumière réelles actuelles.

4. Procédé selon la revendication 1, dans lequel l'ajustement (S201, S401) des premières données d'état de lumière estimées selon des données d'état de lumière réelles actuelles pour obtenir les deuxièmes données d'état de lumière estimées, comprend :
si les données d'état de lumière réelles actuelles et les premières données d'état de lumière estimées sont des données d'état de lumière différentes, la réalisation (S305), sur la base des données d'état de lumière réelles actuelles, d'un traitement de mise à l'échelle sur les premières données d'état de lumière estimées afin obtenir les deuxièmes données d'état de lumière estimées, dans lequel un temps de compte à rebours d'état de lumière représenté par les deuxièmes données d'état de lumière estimées est le même qu'un temps de compte à rebours d'état de lumière représenté par les données d'état de lumière réelles actuelles.

5. Procédé selon la revendication 4, dans lequel la réalisation (S305), sur la base des données d'état de lumière actuelles, du traitement de mise à l'échelle sur les premières données d'état de lumière estimées pour obtenir les deuxièmes données d'état de lumière estimées, comprend :
la détermination d'un temps de compte à rebours d'état de lumière représenté par les données d'état de lumière réelles actuelles, et la détermination d'un temps de compte à rebours d'état de lumière représenté par les premières données d'état de lumière estimées ; et
la réalisation, sur la base du temps de compte à rebours d'état de lumière représenté par les données d'état de lumière réelles actuelles, du traitement de mise à l'échelle sur le temps de compte à rebours d'état de lumière représenté par les premières données d'état de lumière estimées pour obtenir les deuxièmes données d'état de lumière estimées.

6. Procédé selon la revendication 5, dans lequel la réalisation, sur la base du temps de compte à rebours d'état de lumière représenté par les données d'état de lumière réelles actuelles, du traitement de mise à l'échelle sur le temps de compte à rebours d'état de lumière représenté par les premières données d'état de lumière estimées pour obtenir les deuxièmes données d'état de lumière estimées, comprend :
la détermination, selon le temps de compte à rebours d'état de lumière représenté par les données d'état de lumière réelles actuelles et le temps de compte à rebours d'état de lumière représenté par les premières données d'état de lumière estimées, d'une échelle pour réaliser le traitement de mise à l'échelle sur les premières données d'état de lumière estimées, et la réalisation du traitement de mise à l'échelle sur les premières données d'état de lumière estimées sur la base de l'échelle pour obtenir les deuxièmes données d'état de lumière estimées.

7. Procédé selon l'une quelconque des revendications 1 à 6, après la génération et la fourniture en sortie (S202, S304, S402) des premières informations d'état de lumière sur la base des deuxièmes données d'état de lumière estimées, comprenant en outre :
si des données d'état de lumière réelles à un moment ultérieur satisfont l'exigence de données d'état de lumière, et un temps de compte à rebours d'état de lumière représenté par les données d'état de lumière réelles au moment ultérieur et un temps de compte à rebours d'état de lumière représenté par des troisièmes données d'état de lumière estimées correspondant aux données d'état de lumière réelles au moment ultérieur sont différents, la réalisation (S403), sur la base du temps de compte à rebours d'état de lumière représenté par les données d'état de lumière réelles au moment ultérieur, d'un traitement de mise à l'échelle sur le temps de compte à rebours d'état de lumière représenté par les troisièmes données d'état de lumière estimées afin obtenir des quatrièmes données d'état de lumière estimées ; dans lequel un temps de compte à rebours d'état de lumière représenté par les quatrièmes données d'état de lumière estimées est le même que le temps de compte à rebours d'état de lumière représenté par les données d'état de lumière réelles au moment ultérieur ; et
la génération et la fourniture en sortie (S404) de deuxièmes informations d'état de lumière sur la base des données d'état de lumière réelles au moment ultérieur.

8. Procédé selon l'une quelconque des revendications 1 à 7, comprenant en outre :
l'acquisition d'un schéma de commande du feu de circulation, dans lequel le schéma de commande représente une règle de commande du feu de circulation ; et
la prédiction des données d'état de lumière réelles actuelles du feu de circulation selon le schéma de commande afin d'obtenir les premières données d'état de lumière estimées.

9. Procédé selon la revendication 8, dans lequel le schéma de commande est généré sur la base d'un historique d'informations de fonctionnement du feu de circulation.

10. Appareil de traitement de données d'état de lumière (500, 600, 700), **caractérisé en ce qu'**il comprend :
une unité d'ajustement (501, 601, 703), configurée pour, pendant la des données d'état des lumières d'un feu de circulation, si un temps de commande maximum des lumières représenté par les données d'état des lumières réelles actuelles et un temps de commande maximum des lumières représenté par les premières données d'état des lumières estimées correspondant aux données d'état des lumières réelles actuelles sont différents, ajuster les premières données d'état des lumières estimées selon les données d'état des lumières réelles actuelles afin d'obtenir les deuxièmes données d'état des lumières estimées, dans lequel le temps de commande maximum des lumières représenté par les deuxièmes données d'état des lumières estimées est le même que le temps de commande maximum des lumières représenté par les données d'état des lumières réelles actuelles, dans lequel le temps de commande maximum des lumières fait référence à un temps utilisé pour contrôler l'allumage, un cycle et une phase d'un état des lumières ;
une première unité de génération (502, 602, 704), conçue pour, en réponse à la détermination que les données d'état des lumières réelles actuelles ne satisfont pas une exigence des données d'état des lumières prédéfinie, générer les premières informations d'état des lumières sur la base des deuxièmes données d'état des lumières estimées ; et
une première unité de sortie (503, 603, 705), conçue pour fournir en sortie les premières informations d'état de lumière.

11. Appareil (500, 600, 700) selon la revendication 10, dans lequel l'unité d'ajustement (501, 601, 703) comprend :
une sous-unité d'alignement (6011), configurée pour, si les données d'état de lumière réelles actuelles et les premières données d'état de lumière estimées sont les mêmes données d'état de lumière, réaliser, sur la base des données d'état de lumière réelles actuelles, un traitement d'alignement sur les premières données d'état de lumière estimées et les données d'état de lumière réelles actuelles afin d'obtenir les deuxièmes données d'état de lumière estimées.

12. Appareil (500, 600, 700) selon la revendication 11, dans lequel la sous-unité d'alignement (6011) comprend :
un premier module de détermination, configuré pour déterminer un temps d'allumage d'état de lumière représenté par les données d'état de lumière réelles actuelles, et pour déterminer un temps d'allumage d'état de lumière représenté par les premières données d'état de lumière estimées ; et
un module d'ajustement, configuré pour, si le temps d'allumage d'état de lumière représenté par les données d'état de lumière réelles actuelles et le temps d'allumage d'état de lumière représenté par les premières données d'état de lumière estimées sont différents, ajuster le temps d'allumage d'état de lumière représenté par les premières données d'état de lumière estimées au temps d'allumage d'état de lumière représenté par les données d'état de lumière réelles actuelles.

13. Support de stockage non transitoire lisible par ordinateur, **caractérisé par** le stockage sur celui-ci d'instructions informatiques, dans lequel les instructions informatiques sont configurées pour permettre à un ordinateur de mettre en oeuvre le procédé selon l'une quelconque des revendications 1 à 9.

14. Produit de programme d'ordinateur, **caractérisé en ce qu'**il comprend un programme d'ordinateur, lorsque le programme d'ordinateur est exécuté par un processeur, le procédé selon l'une quelconque des revendications 1 à 9 est mis en oeuvre.

15. Système de traitement de données d'état de lumière, **caractérisé en ce qu'**il comprend :
un feu de circulation et un appareil qui est configuré pour mettre en oeuvre le procédé selon l'une quelconque des revendications 1 à 9.
